# DEMANDE DE BREVET EUROPEEN

(11) **EP 1 277 619 A1**
(43) Date de publication de la demande: **22.01.2003**
(21) Numéro de dépôt: 02291789.2
(22) Date de dépôt: 16.07.2002
(51) Int. Cl.: B60R 9/058, F16H 31/00

(54) **Dispositif téléscopique réglable à cliquet, et application sur gallerie de toit de véhicule**

(30) Priorité: 17.07.2001 FR 0109543
(71) Demandeur: Sinto Auto, 35404 Saint Malo Cédex (FR)
(72) Inventeur: Fourel, Pascal, 35400 Saint Malo (FR)
(74) Mandataire: Thinat, Michel

(57) **Abrégé**

L'invention concerne un dispositif télescopique réglable, comprenant notamment un boîtier (2) et une barre (1) coulissante dans le boîtier.

Le dispositif de l'invention inclut un mécanisme opérant et contrôlant le coulissement de la barre, ce mécanisme comprenant une tige (3), un levier d'actionnement (4), mobile par rapport au boîtier (2), des cliquets d'entraînement et de retenue (5,6), et des ressorts précontraints (71,72).

Application à la fixation d'une barre de toit (1) sur le pavillon (9) d'un véhicule automobile.

## Description

La présente invention concerne, de façon générale, les systèmes de fixation, et notamment les systèmes permettant la fixation d'une barre transversale de toit sur le pavillon d'un véhicule automobile.

Plus précisément, l'invention concerne, selon un premier de ses aspects, un dispositif télescopique réglable comprenant une barre coulissante suivant des première et seconde directions longitudinales opposées l'une à l'autre, et un boîtier présentant un logement dans lequel une extrémité de la barre est reçue à coulissement contrôlé.

La conception des dispositifs de ce type, qui peuvent être appliqués à la réalisation de constructions mécaniques relativement diverses, se heurte en général à la difficulté d'obtenir un dispositif qui offre à la fois une grande facilité de réglage et de mise en place, et une force d'arrachement élevée après leur mise en place.

L'invention a précisément pour but de proposer un dispositif télescopique réglable qui réponde à ce besoin.

A cette fin, le dispositif de l'invention, par ailleurs conforme à la définition générique qu'en donne le préambule ci-dessus, est essentiellement caractérisé en ce qu'il comprend une tige, un levier mobile par rapport au boîtier, des cliquets d'entraînement et de retenue, et des premier et second ressorts précontraints, en ce que la tige fait saillie de l'extrémité de la barre et est engagée dans le logement du boîtier suivant la première direction longitudinale, en ce que chaque cliquet adopte par rapport à la tige une configuration passante, dans laquelle la tige coulisse librement par rapport à ce cliquet, et une configuration bloquante, dans laquelle la tige est bloquée en translation par rapport à ce cliquet dans l'une au moins des première et seconde directions longitudinales, en ce que le premier ressort sollicite le cliquet d'entraînement vers sa configuration passante, en ce que le second ressort sollicite le cliquet de retenue vers sa configuration bloquante pour un coulissement de la tige suivant la seconde direction, en ce que le cliquet d'entraînement est sélectivement placé dans sa configuration bloquante par le levier agissant à l'encontre du premier ressort, et en ce que le cliquet d'entraînement est sélectivement déplacé par le levier, en configuration bloquante, dans la première direction par rapport au boîtier.

Chacun des cliquets d'entraînement et de retenue peut présenter un perçage enfilé sur la tige.

Par exemple, chaque cliquet adopte, en configuration passante, une orientation sensiblement perpendiculaire à la tige et, en configuration bloquante, une orientation inclinée par rapport à la tige dans laquelle ce cliquet s'appuie en porte-à-faux sur la tige.

Dans un mode de réalisation pratique de l'invention, il est possible de prévoir que le levier soit mobile par rapport au boîtier entre une position initiale et une position finale en passant par une position d'accrochage, que le premier ressort soit comprimé entre une première butée fixe du logement et le cliquet d'entraînement, que le levier appuie sélectivement sur le cliquet d'entraînement en un point d'appui articulé distant de la tige, que le cliquet d'entraînement, dans la position initiale du levier, soit sollicité par le premier ressort précontraint, suivant la seconde direction longitudinale, contre une seconde butée fixe du logement, et adopte une position de repos dans laquelle il est en configuration passante, que le cliquet d'entraînement, dans la position d'accrochage du levier, soit placé par ce levier dans sa configuration bloquante, que le cliquet d'entraînement, dans la position finale du levier, adopte une position décalée de sa position de repos suivant la première direction longitudinale, dans laquelle il est dégagé de la seconde butée fixe, et dans laquelle il comprime davantage le premier ressort précontraint vers la première butée fixe, que le second ressort soit comprimé entre une troisième butée fixe du logement et le cliquet de retenue, qu'il sollicite à distance de la troisième butée fixe, et que le cliquet de retenue soit monté basculant, par rapport au boîtier et à la tige, entre sa configuration bloquante et sa configuration passante, ce cliquet de retenue étant sollicité vers sa configuration bloquante par le second ressort précontraint suivant la seconde direction, et vers sa position passante par un basculement de ce cliquet de retenue dans la première direction.

Le levier peut être monté mobile en rotation par rapport au boîtier et porter un excentrique par l'intermédiaire duquel il actionne le cliquet d'entraînement.

Le cliquet de retenue comprend une partie externe traversant un perçage du boîtier et sur laquelle un opérateur peut exercer une pression pour basculer le cliquet de retenue à sa position passante.

Le boîtier peut quant à lui présenter un pied qui s'étend suivant une direction inclinée par rapport à la première direction.

Le dispositif de l'invention peut ainsi comprendre un boîtier à chaque extrémité de la barre, chaque boîtier comportant un pied qui s'étend suivant une direction inclinée par rapport à la première direction et qui présente un relief d'accrochage.

Le boîtier opposé au boîtier comportant les cliquets d'entraînement et de retenue est fixé à la barre au moyen d'une cheville.

Le levier mobile, en configuration passante du cliquet d'entraînement, est logé dans le boîtier.

L'invention concerne également l'application du dispositif télescopique réglable, tel que défini précédemment, à la fixation de la barre sur le pavillon d'un véhicule automobile, application dans laquelle le pavillon présente des reliefs de retenue, et dans laquelle la barre est ajustée en coulissement dans l'un des boîtiers jusqu'à ce que les reliefs d'accrochage du dispositif télescopique enserrent les reliefs de retenue du pavillon.

D'autres caractéristiques et avantages de l'invention ressortiront clairement de la description qui en est faite ci-après, à titre indicatif et nullement limitatif, en référence aux dessins annexés, dans lesquels:
- la Figure 1 est une vue en coupe d'un dispositif conforme à l'invention, représenté en extension, et dans lequel le levier est en position initiale;
- la Figure 2 est une vue en coupe du dispositif de la figure 1, le levier étant représenté en position d'accrochage;
- la Figure 3 est une vue en coupe du dispositif de la figure 1 représenté après serrage, le levier étant en position finale;
- la Figure 4 est une vue en coupe du dispositif de la figure 1 représenté après serrage, le levier ayant été ramené à sa position initiale; et
- la Figure 5 est une vue en coupe à échelle réduite d'un dispositif conforme à l'invention, fixé au pavillon d'un véhicule automobile.

Comme annoncé précédemment, l'invention concerne un dispositif télescopique réglable, comprenant essentiellement une barre 1 et un boîtier 2.

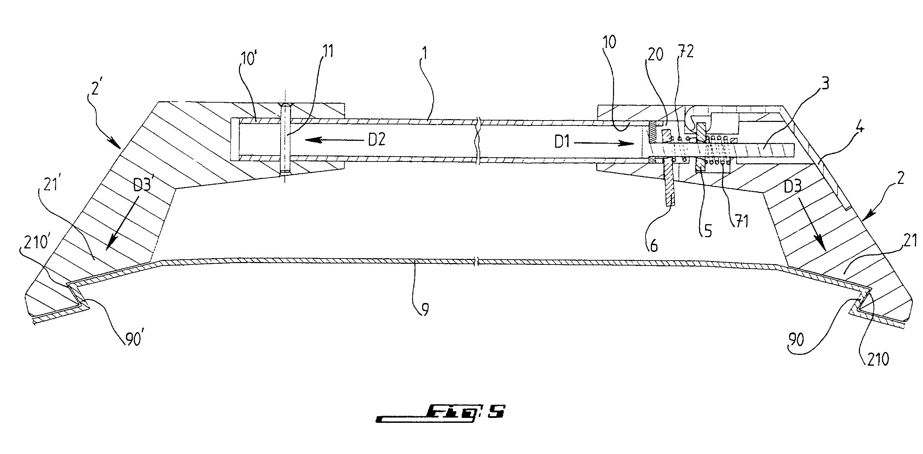

Comme le montre la figure 5, qui illustre l'application privilégiée de l'invention, ce dispositif comprend plus précisément, dans cette application, une barre 1 et deux boîtiers 2 et 2' dont chacun est lié à une extrémité correspondante, 10 et 10', de la barre 1.

Les boîtiers peuvent être identiques ou différents, la barre 1 étant en toute hypothèse montée coulissante suivant deux directions longitudinales opposées, D1 et D2, par rapport à l'un au moins des boîtiers.

La figure 5 illustre la solution la plus économique, dans laquelle la barre est montée coulissante par rapport au boîtier 2, alors qu'elle est fixée au boîtier 2' au moyen d'une cheville 11.

Chacun des boîtiers 2 et 2' comporte un pied, tel que 21 et 21', qui s'étend suivant une direction, telle que D3 et D3', inclinée par rapport à chaque direction de coulissement D1 et D2 de la barre 1, chaque pied 21 et 21' présentant un relief d'accrochage tel que 210 et 210'.

Ce dispositif est destiné à permettre la fixation de la barre 1 sur le pavillon 9 d'un véhicule automobile.

Pour ce faire, le pavillon 9 présente des reliefs de retenue, tels que 90 et 90', avec lesquels les reliefs d'accrochage 210 et 210' des boîtiers 2 et 2' sont respectivement destinés à coopérer.

Une fois que le dispositif est fixé sur le pavillon 9, c'est-à-dire lorsque les reliefs d'accrochage 210 et 210' enserrent, à la manière d'un étau, les reliefs de retenue 90 et 90' comme le montre la figure 5, le coulissement de la barre 1 dans le boîtier 2 suivant la direction D2 permet de dégager les reliefs d'accrochage 210 et 210' des reliefs de retenue 90 et 90', donc de retirer le dispositif du pavillon 9.

Comme le comprendra l'homme de métier, la fixation de ce dispositif sur le pavillon s'effectue par des mouvements de sens inverse, et notamment par le coulissement de la barre 1 dans le boîtier 2 suivant la direction D1.

Les caractéristiques spécifiques de l'invention concernent les moyens qu'elle prévoit pour effectuer et contrôler le coulissement de la barre 1 par rapport au boîtier 2, et plus précisément le coulissement de l'extrémité 10 de la barre 1 dans le logement 20 du boîtier 2.

A cette fin, le dispositif de l'invention comprend essentiellement une tige 3, un levier 4, monté mobile par rapport au boîtier 2, un cliquet d'entraînement 5, un cliquet de retenue 6, et des ressorts précontraints 71 et 72, respectivement associés aux cliquets d'entraînement et de retenue.

Le levier 4 est par exemple monté à rotation sur le boîtier 2, et porte un excentrique 41 par l'intermédiaire duquel ce levier actionne le cliquet d'entraînement 5, sur lequel il appuie en un point d'appui articulé 51 distant de la tige 3.

La tige 3, qui est solidaire de la barre 1, fait saillie de l'extrémité 10 de cette barre et est engagée dans le logement 20 du boîtier 2 suivant la direction longitudinale D1.

Les cliquets d'entraînement et de retenue 5 et 6 présentent par exemple des perçages respectifs 50 et 60, par lesquels ces cliquets sont enfilés sur la tige 3.

Les perçages 50 et 60 ont une taille telle que, lorsque les cliquets 5 et 6 sont perpendiculaires à la tige 3, cette tige coulisse librement dans ces perçages, alors que, lorsque les cliquets 5 et 6 sont suffisamment inclinés par rapport à la tige 3, les perçages s'appuient en porte-à-faux sur la tige 3 et bloquent le mouvement de cette tige dans l'une au moins des directions D1 et D2.

Autrement dit, chacun des cliquets 5 et 6 peut adopter, par rapport à la tige 3, une configuration passante dans laquelle la tige 3 coulisse librement par rapport à ce cliquet, et une configuration bloquante dans laquelle la tige 3 est bloquée en translation par rapport à ce cliquet dans l'une au moins des directions longitudinales D1 et D2.

Pour renforcer l'appui en porte-à-faux des cliquets 5 et 6 en position bloquante, les perçages 50 et 60 peuvent présenter des bords rectilignes, et la tige 3 peut présenter une section polygonale, par exemple la forme d'un hexagone régulier.

Le ressort 72 sollicite en permanence le cliquet de retenue 6 vers sa configuration bloquante, dans un sens propre à bloquer le coulissement de la tige 3 suivant la direction D2.

Par exemple, le ressort 72 est comprimé entre une butée fixe 83 du logement 20 et le cliquet de retenue 6, qu'il sollicite à distance de cette butée 83 suivant la direction D2, tandis que le cliquet de retenue 6 traverse un perçage 200 du boîtier 2 et est monté basculant autour d'une butée 84 de ce boîtier.

Pour adopter sa position passante, le cliquet de retenue 6 doit basculer par rapport à la tige 3 suivant la direction D1.

Ce basculement peut être obtenu par une pression exercée par un opérateur sur la partie externe 61 de ce cliquet 6, ou éventuellement par la traction de la tige 3 qu'effectue le cliquet d'entraînement 5 dans la direction D1, comme on le comprendra ci-dessous.

Le cliquet d'entraînement 5 est en permanence sollicité vers sa configuration passante par le ressort 71, ce dernier étant comprimé entre une butée fixe 81 du logement 20 et le cliquet d'entraînement 5.

Ce cliquet 5 est placé dans sa configuration bloquante par déplacement du levier 4, actionné à l'encontre de la force exercée par le ressort 71.

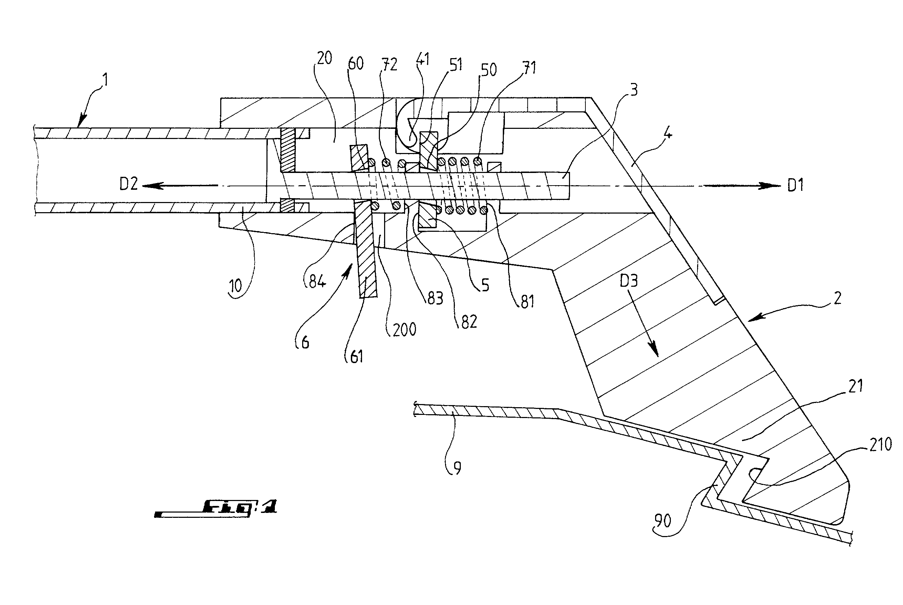

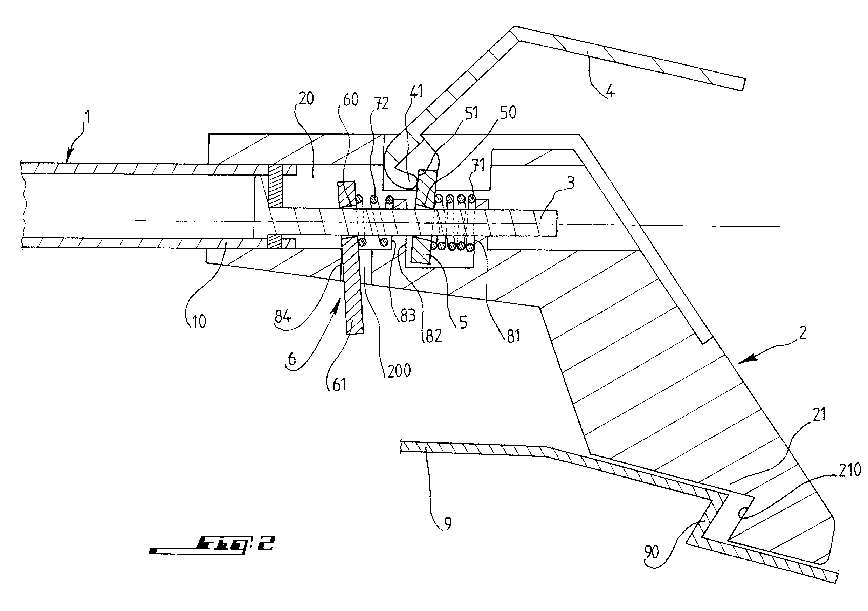

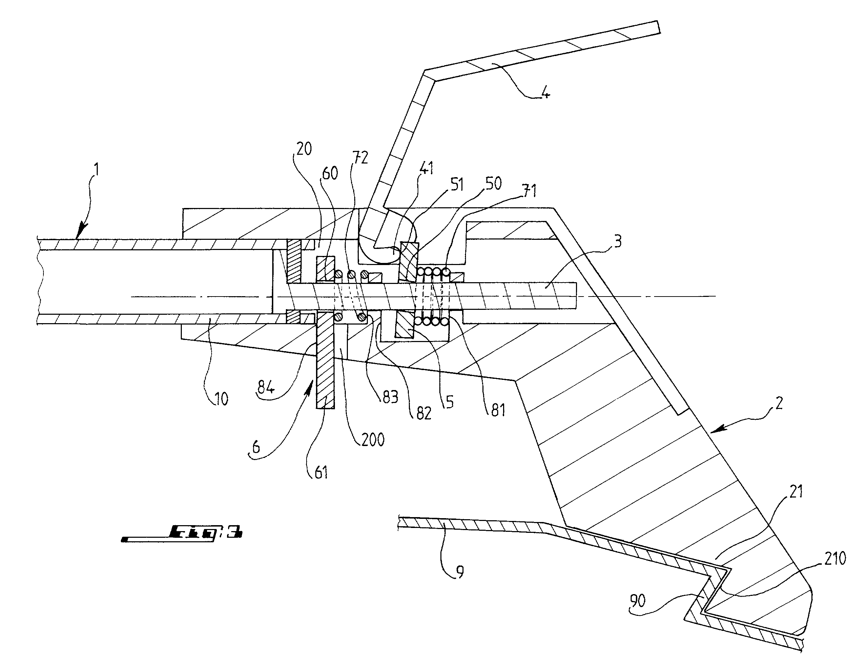

Comme le montrent les figures 1 à 4, le levier 4 est mobile, par rapport au boîtier 2, entre une position initiale (figure 1) et une position finale (figure 3), en passant par une position d'accrochage (figure 2).

Dans la position initiale du levier 4 (figure 1), le cliquet d'entraînement 5 est sollicité par le ressort 71 dans la direction longitudinale D2 contre une butée fixe 82 du logement 20, et adopte une position de repos dans laquelle il est en configuration passante pour la tige.

Lorsque le levier 4 est dans sa position d'accrochage (figure 2), il bascule le cliquet d'entraînement 5 par rapport à la tige, de sorte que ce cliquet adopte sa configuration bloquante.

Lors du déplacement ultérieur du levier 4 jusque dans sa position finale (figure 3), le cliquet d'entraînement 5, qui reste dans sa configuration bloquante, est déplacé par le levier 4 suivant la direction D1 par rapport au boîtier 2, de sorte qu'il entraîne avec lui la tige 3 dans cette même direction D1.

Dans la position finale du levier 4, le cliquet d'entraînement 5 est donc dans une position décalée de sa position de repos suivant la direction D1, c'est-à-dire qu'il est dégagé de la seconde butée fixe 82, et qu'il comprime davantage le ressort 71 vers la butée fixe 8.

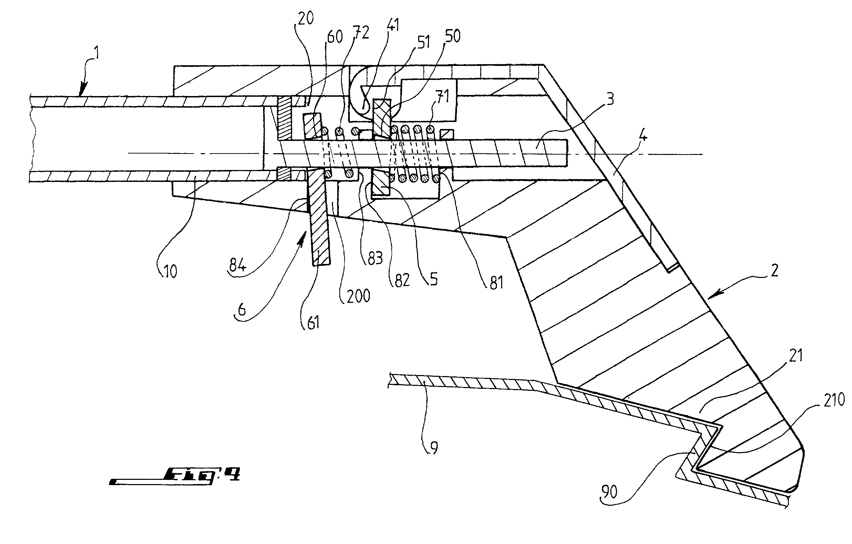

Lorsque le levier 4 est ramené dans sa position initiale (figure 4), le cliquet de retenue 6 interdit tout mouvement de la tige 3 dans la direction D2, et le cliquet 5 glisse sur la tige 3.

A la fin de ce mouvement, la tige 3 s'est donc globalement déplacée dans la direction D1 par rapport à la position qu'elle occupait avant l'actionnement du levier 4, c'est-à-dire par rapport à la position illustrée à la figure 1.

L'actionnement répété du levier 4 permet ainsi de rapprocher à volonté le pied 21 du pied 21' (figure 5), jusqu'à ce que les reliefs d'accrochage 210 et 210' enserrent les reliefs de retenue 90 et 90'.

Inversement, pour éloigner le pied 21 du pied 21', l'opérateur exerce une pression sur la partie externe 61 du cliquet de retenue 6 jusqu'à orienter ce dernier perpendiculairement à la tige 3, et exerce une traction entre la barre 1 et le boîtier 2 pour dégager l'extrémité 10 de la barre du logement 20 du boîtier.

## Revendications

1. Dispositif télescopique réglable, comprenant une barre (1) coulissante suivant des première et seconde directions longitudinales (D1, D2) opposées l'une à l'autre, et un boîtier (2) présentant un logement (20) dans lequel une extrémité (10) de la barre (1) est reçue à coulissement contrôlé, **caractérisé en ce qu'**il comprend une tige (3), un levier (4) mobile par rapport au boîtier (2), des cliquets d'entraînement et de retenue (5, 6), et des premier et second ressorts précontraints (71, 72), **en ce que** la tige (3) fait saillie de l'extrémité (10) de la barre (1) et est engagée dans le logement (20) du boîtier (2) suivant la première direction longitudinale (D1), **en ce que** chaque cliquet (5, 6) adopte par rapport à la tige (3) une configuration passante, dans laquelle la tige (3) coulisse librement par rapport à ce cliquet (5, 6), et une configuration bloquante, dans laquelle la tige (3) est bloquée en translation par rapport à ce cliquet (5, 6) dans l'une au moins des première et seconde directions longitudinales (D1, D2), **en ce que** le premier ressort (71) sollicite le cliquet d'entraînement (5) vers sa configuration passante, **en ce que** le second ressort (72) sollicite le cliquet de retenue (6) vers sa configuration bloquante pour un coulissement de la tige (3) suivant la seconde direction (D2), **en ce que** le cliquet d'entraînement (5) est sélectivement placé dans sa configuration bloquante par le levier (4) agissant à l'encontre du premier ressort (71), et **en ce que** le cliquet d'entraînement (5) est sélectivement déplacé par le levier (4), en configuration bloquante, dans la première direction (D1) par rapport au boîtier (2).

2. Dispositif télescopique réglable suivant la revendication 1, **caractérisé en ce que** chacun des cliquets d'entraînement et de retenue (5, 6) présente un perçage (50, 60) enfilé sur la tige (3).

3. Dispositif télescopique réglable suivant la revendication 1 ou 2, **caractérisé en ce que** chaque cliquet (5, 6) adopte, en configuration passante, une orientation sensiblement perpendiculaire à la tige (3) et, en configuration bloquante, une orientation inclinée par rapport à la tige (3) dans laquelle ce cliquet (5, 6) s'appuie en porte-à-faux sur la tige (3).

4. Dispositif télescopique réglable suivant l'une quelconque des revendications précédentes, **caractérisé en ce que** le levier (4) est mobile par rapport au boîtier (2) entre une position initiale et une position finale en passant par une position d'accrochage, **en ce que** le premier ressort (71) est comprimé entre une première butée fixe (81) du logement (20) et le cliquet d'entraînement (5), **en ce que** le levier (4) appuie sélectivement sur le cliquet d'entraînement (5) en un point d'appui articulé (51) distant de la tige (3), **en ce que** le cliquet d'entraînement (5), dans la position initiale du levier (4), est sollicité par le premier ressort précontraint (71), suivant la seconde direction longitudinale (D2), contre une seconde butée fixe (82) du logement (20), et adopte une position de repos dans laquelle il est en configuration passante, **en ce que** le cliquet d'entraînement (5), dans la position d'accrochage du levier (4), est placé par ce levier (4) dans sa configuration bloquante, **en ce que** le cliquet d'entraînement (5), dans la position finale du levier (4), adopte une position décalée de sa position de repos suivant la première direction longitudinale (D1) dans laquelle il est dégagé de la seconde butée fixe (82), et dans laquelle il comprime davantage le premier ressort précontraint (71) vers la première butée fixe (81), **en ce que** le second ressort (72) est comprimé entre une troisième butée fixe (83) du logement (20) et le cliquet de retenue (6), qu'il sollicite à distance de la troisième butée fixe (83), et **en ce que** le cliquet de retenue (6) est monté basculant, par rapport au boîtier (2) et à la tige (3), entre sa configuration bloquante et sa configuration passante, ce cliquet de retenue (6) étant sollicité vers sa configuration bloquante par le second ressort précontraint (72) suivant la seconde direction (D2), et vers sa position passante par un basculement de ce cliquet de retenue (6) dans la première direction (D1).

5. Dispositif télescopique réglable suivant l'une quelconque des revendications précédentes, **caractérisé en ce que** le levier (4) est mobile en rotation par rapport au boîtier (2) et porte un excentrique (41) par l'intermédiaire duquel il actionne le cliquet d'entraînement (5).

6. Dispositif télescopique selon l'une des revendications précédentes, **caractérisé en ce que** le cliquet de retenue (6) comprend une partie externe (61) traversant un perçage (200) du boîtier (2) et sur laquelle un opérateur peut exercer une pression pour basculer le cliquet de retenue (6) à sa position passante.

7. Dispositif télescopique réglable suivant l'une quelconque des revendications précédentes, **caractérisé en ce que** le boîtier (2) présente un pied (21) qui s'étend suivant une direction (D3) inclinée par rapport à la première direction (D1).

8. Dispositif télescopique réglable suivant la revendication 7, **caractérisé en ce qu'**il comprend un boîtier (2, 2') à chaque extrémité (10, 10') de la barre (1), et **en ce que** chaque boîtier (2, 2') comporte un pied (21) s'étendant suivant une direction (D3, D3') inclinée par rapport à la première direction (D1) et présentant un relief d'accrochage (210, 210').

9. Dispositif télescopique selon la revendication 8, **caractérisé en ce que** le boîtier (2') opposé au boîtier (2) comportant les cliquets d'entraînement et de retenue (5, 6) est fixé à la barre (1) au moyen d'une cheville (11).

10. Dispositif télescopique selon l'une des revendications précédentes **caractérisé en ce que** le levier mobile (4), en configuration passante du cliquet d'entraînement (5), est logé dans le boîtier (2).

11. Application d'un dispositif télescopique réglable suivant l'une des revendications 8 à 10 à la fixation de la barre sur le pavillon (9) d'un véhicule automobile, dans laquelle le pavillon (9) présente des reliefs de retenue (90, 90'), et dans laquelle la barre (1) est ajustée en coulissement dans l'un des boîtiers (2, 2') jusqu'à ce que les reliefs d'accrochage (210, 210') du dispositif télescopique enserrent les reliefs de retenue (90, 90') du pavillon (9).
